# EUROPÄISCHE PATENTSCHRIFT

(11) **EP 0 970 426 B1**
(45) Veröffentlichungstag und Bekanntmachung des Hinweises auf die Patenterteilung: **21.05.2003**
(21) Anmeldenummer: 98912207.2
(22) Anmeldetag: 12.02.1998
(51) Int. Cl.: G06F 13/16

(54) **ABHÄNGIGKEITSSTEUERUNG FÜR ÜBERLAPPENDE SPEICHERZUGRIFFE**
DEPENDENCY CONTROLLER FOR OVERLAPPING MEMORY ACCESS OPERATIONS
SYSTEME DE COMMANDE DE DEPENDANCE POUR ACCES MEMOIRE A CHEVAUCHEMENT

(30) Priorität: 26.03.1997 DE 19712799
(43) Veröffentlichungstag der Anmeldung: 12.01.2000
(73) Patentinhaber: Fujitsu Siemens Computers GmbH, 81739 München (DE)
(72) Erfinder: SCHRÄDER, Bernard, D-33129 Delbrück (DE)
(74) Vertreter: Hermann, Uwe, Dipl.-Ing.
(86) Internationale Anmeldenummer: DE9800404
(87) Internationale Veröffentlichungsnummer: WO98043175

(56) Entgegenhaltungen:
- EP-A- 0 817 091
- WO-A-90/00284

## Beschreibung

Die Erfindung betrifft ein Verfahren zum Steuern des Zugriffs auf Speicherzellen eines Datenspeichers, auf den mittels eines Bussystems mit getrennten Adress- und Datenphasen zugegriffen wird.

Derartige bekannte Verfahren werden z.B. eingesetzt, wenn als Bus ein sogenannter SP-Bus (splitted transaction bus) verwendet wird, wie er beispielsweise in dem Buch von J. Hennessy und M. Kaufmann, "Computer Architecture", 2.Auflage 1996, S.439 und S.728-30, beschrieben ist. Bei einem SP-Bus werden Zugriffe auf den Datenspeicher in mehrere Phasen unterteilt; insbesondere in eine Adressphase, in der die Adresse einer Speicherzelle auf dem Bus übermittelt wird; gegebenenfalls eine Auswertephase zur Überprüfung der richtigen Übermittlung der Adresse; sowie eine Datenphase, in der Daten auf dem Bus zum Datenspeicher oder vom Datenspeicher übermittelt werden. Die Unterteilung in verschiedene Phasen wird vorgenommen, um Blockierungen des Busses zwischen dem Bereitstellen der Adresse und dem Bereitstellen der zugehörigen Daten zu vermeiden. Den verschiedenen Phasen ist ein gemeinsames Kennzeichen (Tag) zugeordnet, durch das gewährleistet wird, daß auch Zugriffe mit anderen Kennzeichen zeitlich parallel bearbeitet werden können und eine Datentransferphase einer Adressphase zugeordnet werden kann.

Beim zeitlich parallelen Abarbeiten von Vorgängen mit verschiedenen Kennzeichen sind jedoch bestimmte Anforderungen bezüglich der Reihenfolge des Abarbeitens der verschiedenen Vorgänge einzuhalten (strong ordering). Es sollte z.B. gewährleistet sein, daß ein Lesevorgang, dessen Bearbeitung nach einem Schreibvorgang begonnen hat, diesen Schreibvorgang nicht überholt. Die Folge wäre ansonsten, daß ein falscher Wert aus dem Datenspeicher gelesen wird.

Als Datenspeicher werden vorzugsweise schnelle Halbleiter-Direktzugriffsspeicher (RAM, random access memory) verwendet. Eine Anwendung auf andere Schreib-Lese-Speicher, Festplatten und andere Speichermedien ist damit nicht ausgeschlossen. Das Verfahren bzw. die Anordnung werden bevorzugt bei Datenverarbeitungsanlagen mit mehreren Prozessoren und gemeinsamem Speicher verwendet, bei denen ein gleichzeitiger Zugriff auf dieselbe Speicherzelle relevant ist. Eine Anwendung auf Datenverarbeitungsanlagen mit lediglich einem Rechenprozessor ist dadurch nicht ausgeschlossen, weil auch in einer solchen ein gattungsgemäßes Bussystem verwendbar ist.

Bei bisherigen Verfahren wird ein Zugriff auf den Datenspeicher abgebrochen, sobald erkannt wird, daß die erforderliche Reihenfolge bei der Abarbeitung von Zugriffen verletzt wird. Dem jeweiligen Prozessor wird auf dem Bus mitgeteilt, daß der versuchte Zugriff nicht erfolgreich war. Somit muß dieser oder ein anderer Prozessor später noch einmal versuchen, den Zugriff durchzuführen.

Nachteilig bei dem bekannten Verfahren ist, daß der Bus durch wiederholte Zugriffsversuche mehr als notwendig beansprucht wird. Außerdem wird zusätzliche Rechenzeit im Prozessor bei der Wiederholung von Zugriffen verbraucht.

Es ist Aufgabe der Erfindung, überlappende Speicherzugriffe so zu steuern, daß Abhängigkeiten berücksichtigt werden, ohne hierzu die Speicherzugriffe abzubrechen.

Diese Aufgabe wird durch ein Verfahren mit den Merkmalen des Patentanspruchs 1 gelöst.

Die Erfindung geht von der Überlegung aus, daß ein Verzögern eines Zugriffs gegenüber dem Abbruch des Zugriffs zu besseren Ergebnissen führt, da die auftretenden Verzögerungen letztlich kürzer sind und weniger Rechenzeit beanspruchen als ein Wiederholen des Zugriffs.

Bei der Erfindung werden Adresswörter in einem Adressspeicher jeweils mit einem auf dem Bus neu übertragenen Adresswort verglichen. Die Auswahl der Adresswörter hängt dabei von den bei der Überwachung der Reihenfolge der Zugriffe auf den Datenspeicher gewählten Kriterien ab. Soll z.B. verhindert werden, daß Lesezugriffe Schreibzugriffe überholen, so werden die Adresswörter ausgewählt, die zu Schreibzugriffen gehören. Sind in diesem Fall nur Adresswörter zu Schreibzugriffen im Adressspeicher vorhanden, so umfaßt die Auswahl sämtliche Adresswörter im Adressspeicher.

Die Vergleichsergebnisse werden in Bitstellen eines Abhängigkeitsvektors eingetragen, wobei jede Bitstelle dem Kennzeichen des beim jeweiligen Einzelvergleich verwendeten gespeicherten Adresswortes zugeordnet ist. Dem entstehenden Abhängigkeitsvektor selbst wird das Kennzeichen des neuen Adresswortes zugeordnete. Die aktuell bearbeiteten Abhängigkeitsvektoren werden in einem Abhängigkeitsvektorspeicher gespeichert, so daß die beim Vergleich festgestellten Übereinstimmungen für die weitere Bearbeitung genutzt werden können. Die Übereinstimmungen sind letztlich auf Abhängigkeiten der durch die verschiedenen Kennzeichen gekennzeichneten Zugriffe zurückzuführen. Dabei handelt es sich um eine zeitliche Abhängigkeit beim Ausführen der Zugriffe, die darin besteht, daß die markierten Zugriffe unbedingt zuvor abzuschließen sind.

Durch eine auf dem SP-Bus ablaufende Datenphase, die durch das Kennzeichen einer Adresse zugeordnet ist, erhält der Steuerteil die Nachricht, daß ein Zugriff dieses Kennzeichens abgeschlossen ist. Das Steuerteil löscht daraufhin in allen Abhängigkeitsvektoren Eintragungen auf der Bitstelle, welche diesem Kennzeichen zugeordnet ist. Somit werden bei der Erfindung die beim Vergleich festgestellten Zusammenhänge dadurch an den momentanen Bearbeitungsstand angepaßt, daß die Eintragungen in den Abhängigkeitsvektoren ständig korrigiert werden.

Die Zuordnung von Kennzeichen zu Adresswörtern bzw. zu den Abhängigkeitsvektoren kann explizit sein oder zum Beispiel hinsichtlich der Adresswörter dadurch erreicht werden, daß Adressworte zu einem bestimmten Kennzeichen immer an der gleichen Stelle im Adressspeicher gespeichert werden. Ebenso kann die Zuordnung von Kennzeichen zu Abhängigkeitsvektoren dadurch erfolgen, daß beim Hinterlegen der Abhängigkeitsvektoren in einem Abhängigkeitsvektorspeicher jede Speicherzelle den in ihr enthaltenen Abhängigkeitsvektor kennzeichnet.

Wird zumindest bei Lesezugriffen auf den Datenspeicher aus dem Abhängigkeitsvektor, der in seinem Kennzeichen mit dem Kennzeichen des Adressworts des jeweiligen Lesezugriffs übereinstimmt, ein Statussignal erzeugt, so kann der Zugriff auf den Datenspeicher so lange verzögert werden, bis das Statussignal anzeigt, daß im betreffenden Abhängigkeitsvektor keine Eintragungen mehr enthalten sind. Kein Eintrag bedeutet, daß keine Abhängigkeit mehr von anderen vorher auszuführenden Zugriffen besteht. Der Zugriff kann somit erst erfolgen, wenn die Kriterien eingehalten werden, die für die Zugriffsreihenfolge aufgestellt wurden.

Durch die Erfindung wird erreicht, daß ein Adresswort auf dem Bus nur einmal übermittelt wird. Tritt ein Konflikt zwischen verschiedenen Zugriffen auf, so wird der jeweils letzte Zugriff verzögert, bis der Konflikt nicht mehr besteht. Erst dann wird das zum Adresswort gehörende Datenwort bearbeitet. Gegenüber bekannten Verfahren wird die Inanspruchnahme des Busses verringert, da für einen Zugriff das Adresswort nur einmal übermittelt werden muß. Weiterhin wird der Prozessor entlastet, der das Adresswort sendet, da ein wiederholtes Senden des Adresswortes vermieden wird. Letztlich ergibt sich ein Verfahren zum Steuern des Zugriffs, das trotz der auftretenden Verzögerungen zu einer Beschleunigung des Zugriffs führt, da die auftretenden Verzögerungen kürzer sind als die Zeit, die für eine Wiederholung des Zugriffs benötigt würde.

Die Erfindung betrifft in einem weiteren Aspekt eine Schaltungsanordnung, die insbesondere zur Durchführung des Verfahrens zum Steuern des Zugriffs geeignet ist. Die beschriebenen Eigenschaften gelten entsprechend auch für diese Anordnung.

Es handelt sich also um eine Abhängigkeitssteuerung für überlappende Speicherzugriffe, deren Adressen ein Kennzeichen tragen, bei der die noch nicht abgearbeiteten Adressen unter dem Kennzeichen gespeichert und durch Vergleich jeder neuen Adresse mit gespeicherten Adressen ein Bitvektor erzeugt und gespeichert wird, dessen Bits den Kennzeichen zugeordnet sind und denen Bits bei Abschluß des zugeordneten Speicherzugriffs gelöscht werden.

Im folgenden wird ein Ausführungsbeispiel der Erfindung mit Varianten anhand der beiliegenden Zeichnungen erläutert. Darin zeigen:
- Fig. 1: eine Prinzipdarstellung von elektronischen Baueinheiten für den Zugriff auf einen Datenspeicher,
- Fig. 2: die Prinzipdarstellung einer Freigabeeinheit zum Freigeben von Zugriffen auf den Datenspeicher, und
- Fig. 3: eine Zustandsspeicherzelle der Freigabeeinheit.

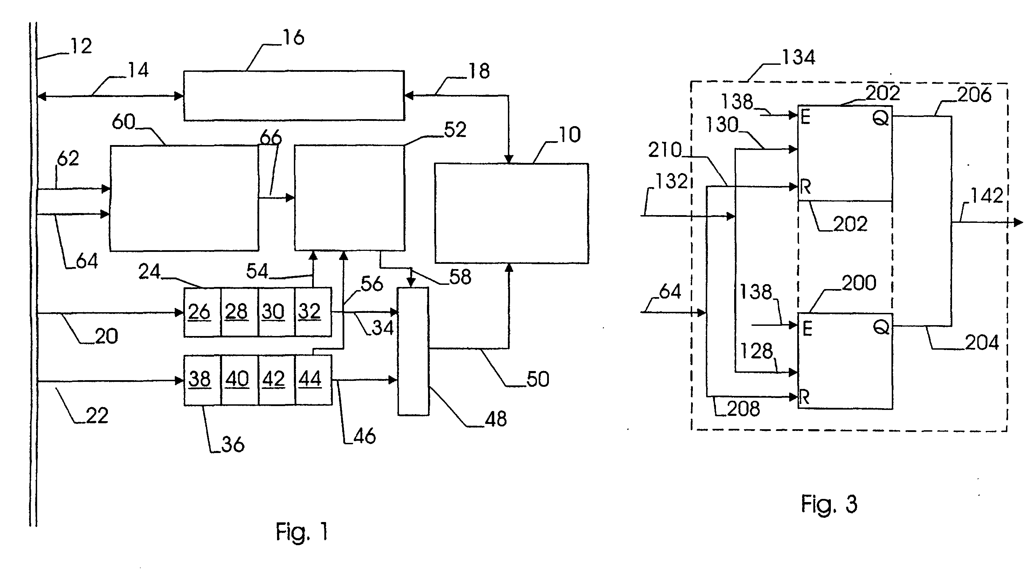

Die Figur 1 zeigt eine Prinzipdarstellung von elektronischen Baueinheiten für den Zugriff auf einen Datenspeicher 10 in einer Datenverarbeitungsanlage. Mehrere nicht dargestellte Prozessoren der Datenverarbeitungsanlage sind an einen SP-Bus 12 angeschlossen, der u.a. Leitungen zur Übertragung von Daten, Leitungen zur Übertragung von Adressen sowie Leitungen zur Übertragung von Steuersignalen enthält.

Mit den Datenleitungen des SP-Busses 12 ist ein bidirektionaler Datenbus 14 elektrisch verbunden, über den Datenworte zwischen dem SP-Bus 12 und einem Datenpuffer 16 in beiden Richtungen des Datenbusses 14 übermittelt werden können. Im Datenpuffer 16 werden über den SP-Bus übermittelte Datenworte gespeichert, bis sie über einen weiteren bidirektionalen Datenbus 18 zwischen dem Datenpuffer 16 und dem Datenspeicher 10 übermittelt werden. Ebenso werden im Datenpuffer 16 aus dem Datenspeicher 10 gelesene Datenworte gespeichert, falls die Übermittlung auf dem SP-Bus 12 erst später erfolgen soll. Bei Verwendung getrennter Schreib- und Lesepuffer können die Datenleitungen 14, 18 auch jeweils unidirektional ausgeführt sein.

Mit den Adressleitungen des SP-Busses sind Leitungen eines Lese-Adressbusses 20 und eines Schreib-Adressbusses 22 verbunden. Über den Lese-Adressbus 20 werden vom SP-Bus 12 zu einem Lese-Speicher 24 Adressworte übermittelt, die eine Lese-Adresse für eine Speicherzelle des Datenspeichers 10 enthalten. Lese-Adresse bedeutet in diesem Zusammenhang, daß aus der Speicherzelle, deren Adresse mit der Lese-Adresse übereinstimmt, ein Datenwort gelesen werden soll. Zur Vereinfachung der Darstellung sind in der Figur 1 nur vier Speicherzellen 26 bis 32 im Lese-Speicher 24 vorhanden, in denen die nacheinander auf dem Lese-Adressbus 20 übermittelten Adressworte vorzugsweise nach Art einer Datenschlange (FIFO, first-in-first-out) gespeichert werden, so daß zuerst in den Speicher 24 geschriebene Adresswörter auch als erste Adresswörter wieder am Ausgang des Speichers 24 gelesen werden. Der Ausgang des Speichers 24 ist mit einem weiteren Lese-Adressbus 34 verbunden. In der Praxis ist die Anzahl der Speicherzellen 26 bis 32 in Speicher 24 größer als vier; höchstens gleich der Anzahl der möglichen Kennzeichen, weil mehr Lese- bzw. Schreibanforderungen nicht noch nicht abgeschlossen sein können. Auch können, bei entsprechender Erhöhung der Komplexität z.B. der Entscheidungseinheit, anstelle von FIFO-Speichern einzeln adressierbare Speicher verwendet werden, mit denen dann eine Vertauschung der Reihenfolge innerhalb der Lese- bzw. Schreib-Anforderungen möglich ist, um beispielsweise zwei Lesezugriffe auf dieselbe Adresse unmittelbar nacheinander auf dem Datenpuffer 16 zu erfüllen. Die Speicher für die Adressen enthalten auch die jeweiligen Kennzeichen, damit eine Zuordnung zu den weiter unten beschriebenen Abhängigkeitssignalen auf dem Bus 66 erfolgen kann.

Auf dem Schreib-Adressbus 22 werden Adresswörter vom SP-Bus zu einem Schreib-Speicher 36 übermittelt. Die auf dem Schreib-Adressbus 22 übermittelten Adresswörter enthalten Schreib-Adressen, d.h. Adressen des Datenspeichers 10, die Speicherzellen adressieren, in die Datenworte geschrieben werden sollen. Die auf dem Schreib-Adressbus 22 übertragenen Adresswörter werden gemäß dem FIFO-Prinzip in vier Speicherzellen 38 bis 44 des Schreib-Speichers 36 gespeichert. Der Ausgang des Speichers 36 ist mit einem weiteren Schreib-Adressbus 46 verbunden, auf dem die aus dem Speicher 36 ausgegebenen Adresswörter übertragen werden.

Der Lese-Adressbus 34 und der Schreib-Adressbus 46 sind mit einer Multiplexer-Einheit 48 verbunden, mit der wahlweise Adresswörter mit Lese-Adressen vom Lese-Adressbus 34 oder Adresswörter mit Schreib-Adressen vom Schreib-Adressbus 46 zu einem Speicher-Adressbus 50 übermittelt werden, dessen Leitungen mit den Adressleitungen des Datenspeichers 10 elektrisch verbunden sind.

Das Auslesen der Adresswörter aus dem Lese-Speicher 24 bzw. aus dem Schreib-Speicher 36 wird durch eine Entscheidungseinheit 52 gesteuert. Über eine Leitung 54 zwischen dem Lese-Speicher 24 und der Entscheidungseinheit 52 wird der Entscheidungseinheit 52 signalisiert, ob Adresswörter im Lese-Speicher 24 enthalten sind. Entsprechend wird der Entscheidungseinheit 52 über eine Leitung 56 zwischen dem Schreib-Speicher 36 und der Entscheidungseinheit 52 signalisiert, ob Adresswörter im Schreib-Speicher 36 enthalten sind.

Die Entscheidungseinheit entscheidet nach einer vorgegebenen Strategie, wie die Multiplexer-Einheit 48 abhängig von den Adresswörtern in den Speichern 24 und 36 anzusteuern ist. Eine einfache Strategie besteht zum Beispiel darin, daß die Adresswörter im Lese-Speicher 24 vorrangig bearbeitet werden. Das bedeutet, daß die Multiplexer-Einheit 48 über eine Ausgangsleitung 58 der Entscheidungseinheit 52 so angesteuert wird, daß nacheinander alle im Lese-Speicher 24 enthaltenen Adresswörter über den Lese-Adressbus 34 und den Speicher-Adressbus 50 übermittelt werden. Erst wenn keine Adresswörter mehr im Lese-Speicher 24 enthalten sind, werden ggf. im Schreib-Speicher 36 enthaltene Adresswörter über den Schreib-Adressbus 46 und den Speicher-Adressbus 50 an den Datenspeicher 10 übermittelt. Andere, "Aushungerung" ('starvation') vermeidende Strategien, die eine übermäßige Benachteiligung von Schreibzugriffen durch ein Mindest-Quorum erreichen, können gleichfalls verwendet werden. In jedem Fall werden jedoch vorbestimmte Kriterien bei der Reihenfolge des Abarbeitens der Adresswörter in den Speichern 24 und 36 berücksichtigt, um eine Verfälschung der Ergebnisse gegenüber der auf einem Rechner mit herkömmlichem, nicht-SP-Bus zu vermeiden. Aktuell bestehende Abhängigkeiten werden mit Hilfe einer Freigabeeinheit 60 erkannt, die eingangsseitig über einen Adressbus 62 mit den Adressleitungen des SP-Busses 12 verbunden ist. Der Adressbus 62 übermittelt Adresswörter vom SP-Bus 12 zur Freigabeeinheit 60.

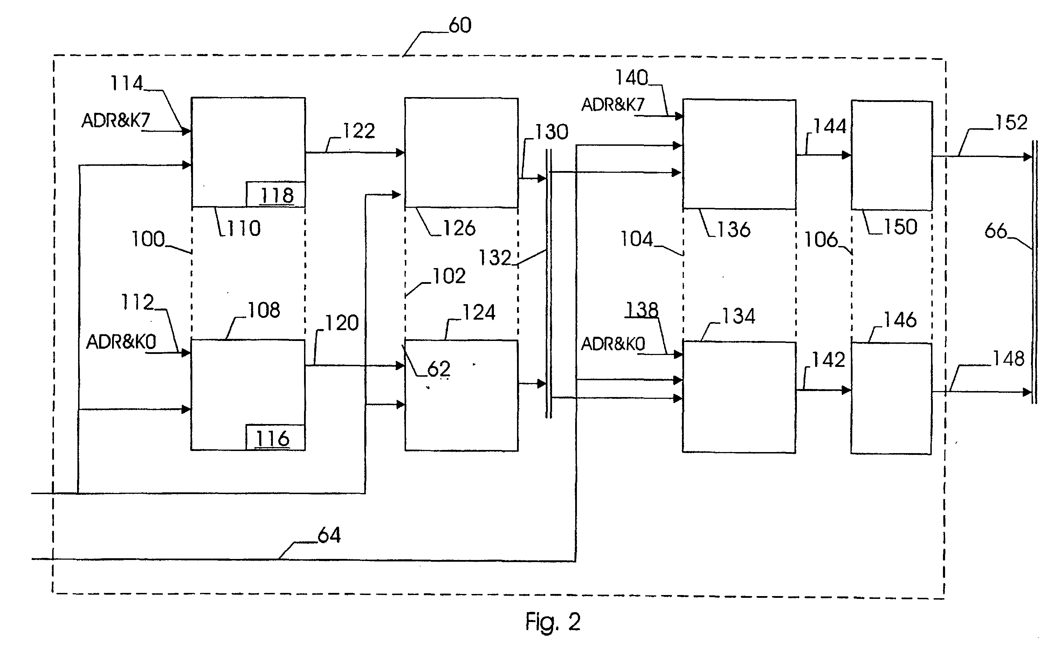

Außerdem ist die Freigabeeinheit 60 über einen Steuerbus 64 mit den Steuerleitungen des SP-Busses 12 verbunden. Anhand von Kennzeichen, welche über den Steuerbus 64 der Freigabeeinheit 60 übermittelt werden, aktualisiert die Freigabeeinheit wie anhand der Figur 2 unten beschrieben, bestehende Abhängigkeiten zwischen den momentan in Bearbeitung stehenden Zugriffen auf den Datenspeicher 10. Über einen Bus 66 signalisiert die Freigabeeinheit 60 der Entscheidungseinheit 52 die aktuell bestehenden Abhängigkeiten, so daß diese von der Entscheidungseinheit bei der Umsetzung der vorgegebenen Strategie berücksichtigt werden.

Durch die in der Figur 1 gezeigte Schaltungsanordnung wird es möglich, Zugriffe auf den Datenspeicher 10 zu bearbeiten, die in mehrere Zugriffsvorgänge unterteilt sind. Die verschiedenen Phasen eines Zugriffs lassen sich über ein dem jeweiligen Zugriff und seinen Phasen zugeordnetes Kennzeichen eindeutig bestimmen. Die Freigabeeinheit 60 sichert, daß trotz Einhaltung vorgegebener Anforderungen bezüglich der Reihenfolge des Abarbeitens der verschiedenen Vorgänge auf dem SP-Bus 12 keine Zurückweisungen von Zugriffen stattfindet. Kommt es zu Konflikten, so wird das Auslesen von Adresswörtern aus dem Lese-Speicher 24 bzw. aus dem Schreib-Speicher 36 solange verzögert, bis der Konflikt aufgrund von anderen Vorgängen, wie z.B. das Auslesen von Adresswörtern aus dem jeweils anderen Speicher 24 bzw. 36, beseitigt ist.

Figur 2 zeigt eine Prinzipdarstellung der Freigabeeinheit 60, die eine Adresspuffereinheit 100, eine Vergleichseinheit 102, einen Zustandsspeicher 104 und eine Auswerteeinheit 106 enthält. Außerdem enthält die Freigabeeinheit 60 eine nicht dargestellte Steuerung, die z.B. die Erzeugung von Steuersignalen abhängig von den Kennzeichen K0 bis Kn übernimmt, wobei n eine natürliche Zahl ist, z.B. sieben.

Die Adresspuffereinheit 100 enthält soviele Adresspuffer wie Kennzeichen, um zu jeder mit einer Adressphase begonnenen, aber nicht durch einen Datentransfer abgeschlossene Transaktion einen Speicherplatz für die betroffene Adresse bereitzustellten, von denen in der Figur 2 ein Adresspuffer 108 zum Speichern eines Adresswortes mit dem Kennzeichen K0 und ein Adresspuffer 110 zum Speichern eines Adresswortes mit dem Kennzeichen K7 dargestellt sind. Die Adresspuffer 108, 110 der Adresspuffereinheit 100 sind jeweils eingangsseitig mit sämtlichen Leitungen des Adressbusses 62 verbunden. An jeden der Adresspuffer 108 bis 110 führt weiterhin jeweils eine Signalleitung, von denen in der Figur 2 die Signalleitung 112 am Eingang des Adresspuffers 108 und die Signalleitung 114 am Eingang des Adresspuffers 110 dargestellt sind. Liegt auf einer der Signalleitungen 112, 114 ein Signal "H" an, so wird das aktuell auf dem Adressbus 62 anliegende Adresswort in dem jeweiligen Adresspuffer 108, 110 übernommen. Hierzu kann auch ein nicht dargestelltes synchrones Taktsignal eingesetzt werden, welches auch im folgenden nicht weiter erwähnt wird, aber bei allen Freigabesignalen verwendet werden kann. Auf der Signalleitung 112 wird das Signal "H" erzeugt, sobald ein Adresswort auf dem Adressbus 62 vorliegt, dem das Kennzeichen K0 zugeordnet ist. Auf der Signalleitung 114 wird dagegen der Signalwert "H" erzeugt, sobald auf dem Adressbus 62 ein Adresswort vorliegt, welches dem Kennzeichen K7 zugeordnet ist. Damit stellt die Adresspuffereinheit 100 einen Adresspuffer dar, der mit dem Kennzeichen adressiert ist. Gleichzeitig mit der Übernahme des jeweiligen Adresswortes in einen der Adresspuffer 108, 110 wird durch die übergeordnete Steuerung u.a. in einen dem jeweiligen Adresspuffer 108, 110 zugeordnetem Indikator 116, 118 vermerkt, ob das Adresswort eine Lese-Adresse oder eine Schreib-Adresse enthält. Die Behandlung dieser Information wird der Übersichtlichkeit halber zunächst nicht weiter dargestellt und dann weiter unten genauer erläutert.

Die Adresspuffer 108, 110 sind jeweils über zu einem Bus 120, 122 zusammengefaßte Leitungen mit den Eingängen von Vergleicherbausteinen 124, 126 verbunden, die in der Vergleichseinheit 102 enthalten sind. So verbindet der Bus 120 den Adresspuffer 108 mit dem Vergleicherbaustein 124. Der Adresspuffer 110 ist über den Bus 122 mit dem Vergleichsbaustein 126 verbunden.

Jeder Vergleichsbaustein 124, 126 der Vergleichseinheit 102 hat einen weiteren Eingang, der jeweils mit dem Adressbus 62 verbunden ist. Die Vergleichsbausteine 124 bis 126 vergleichen jeweils die Adresswörter an ihren Eingängen und geben auf ihren Ausgangsleitungen 128, 130 abhängig vom Vergleichsergebnis Signalwerte aus. Damit entsteht ein Abhängigkeitsvektor mit sovielen Stellen wie Kennzeichen, der im bislang beschriebenen einfachen Fall Binärwerte speichert, nämlich ob eine Koinzidenz zu früheren Zugriffen auf dieselbe Adresse besteht.

Die Ausgangsleitungen 128, 130 sind zu einem Bus 132 zusammengefaßt, der mit Eingängen von Zustandsspeicherzellen 134, 136 eines Zustandspeichers 104 verbunden ist. Außerdem sind weitere Eingänge sämtlicher Zustandsspeicherzellen 134, 136 mit dem Steuerbus 64 verbunden. Über Signalleitungen 138, 140 wird durch die übergeordnete Steuerung diejenige Zustandsspeicherzelle 134, 140 ausgewählt, denen das Kennzeichen der auf dem Bus 132 aktiven Adressphase zugeordnet sind. So wird die Zustandsspeicherzelle 134 über die Signalleitung 138 wirksam geschaltet, wenn auf dem Adressbus 62 ein Adresswort mit dem Kennzeichen K0 anliegt, welches mit ausgewählten Adresswörtern der Adresspuffereinheit 100 in der Vergleichseinheit 102 verglichen wird. Die Zustandsspeicherzelle 134 speichert dann einen Abhängigkeitsvektor für das Kennzeichen K0. Über die Signalleitung 140 wird die Zustandsspeicherzelle 136 wirksam geladen (oder beschrieben), falls auf dem Adressbus 62 ein Adresswort mit dem Kennzeichen K7 als Vergleichsbasis in der Vergleichseinheit 102 dient. In diesem Fall wird das Vergleichsergebnis auf dem Bus 132 als Abhängigkeitsvektor in der Zustandszelle 136 für das Kennzeichen K7 gespeichert. Der Aufbau der Zustandsspeicherzellen 134, 136 wird unten anhand der Figur 3 näher erläutert.

Damit ist eine quadratische Abhängigkeitsmatrix gebildet, deren Stellen anzeigen, ob eine Koinzidenz zu anderen Transkationen derselben Adresse besteht. Die Diagonale dieser Matrix wird immer als unbesetzt gespeichert, indem z.B. die entsprechenden Eingänge nicht mit den entsprechenden Leitungen des Bus 132 für die Abhängigkeitsvektoren verbunden sind. Diese Technik bietet sich an, wenn die verwendeten Zustandsspeicher als Moduln in einer kundenspezifischen Schaltung (ASIC) oder als integrierte Schaltkreise auf einer konventionellen Leiterplatte angeordnet sind. Alternativ können die Speicherzellen, wenn dies günstiger ist, auch gänzlich entfallen und ihre Ausgänge durch ein festes logisches Signal ersetzt werden. Denn die Speicherzugriffe eines Kennzeichens kollidieren nie mit sich selbst. Abhängig von dem Zeitpunkt, an dem die Adresse der aktuellen Adressphase in dem zugehörigen Adresspuffer gespeichert und am Ausgang gültig wird, würde das Ausgangssignal des diesem Kennzeichen zugeordneten Vergleichers variieren. Die gelöschte Diagonale vereinfacht zudem die nachfolgend beschriebene Auswertung durch eine Oder-Funktion.

Zur Auswertung ist jede Zustandsspeicherzelle 134, 136 ausgangsseitig mit einem Bus verbunden, von denen in der Figur 2 ein Bus 142 am Ausgang der Zustandsspeicherzelle 134 und ein Bus 144 am Ausgang der Zustandsspeicherzelle 136 gezeigt sind. Über den Bus 142 wird das Zustandsdatenwort für das Kennzeichen K0 von der Zustandsspeicherzelle 134 an eine ODER-Schaltung 146 übertragen, welche die Signale auf den Leitungen des Busses 142 gemäß der logischen ODER-Funktion verknüpft. Das Ergebnis der Verknüpfung wird am Ausgang der ODER-Schaltung 146 auf einer Leitung 148 des Busses 66 ausgegeben. Auf dem Bus 144 wird das aktuelle Zustandsdatenwort für das Kennzeichen K7 von der Zustandsspeicherzelle 136 an eine weitere ODER-Schaltung 150 der Auswerteeinheit 106 übermittelt, welche wie die ODER-Schaltung 146 arbeitet. Der Ausgang der ODER-Schaltung 150 ist mit einer Leitung 152 des Busses 66 verbunden.

Dieser Bus 66 wird der Entscheidungseinheit 52 zugeführt und zeigt an, welche Transaktionen noch nicht durchgeführt werden können, weil sie im Konflikt zu früherern Transaktionen stehen. Die Oder-Funktionen 146, 150 sind daher von der logischen Struktur her der Entscheidungseinheit zügehörig, werden aber von der Schaltungstechnik, um die Verbindungen kurz zu halten, besser nahe den Zustandsspeichern 134, 136 angeordnet.

Wird die Freigabeeinheit 60 z.B. dafür verwendet, um zu verhindern, daß Lesezugriffe auf den Datenspeicher 10 Schreibzugriffe auf die Datenspeicher 10 nicht überholen, so ergibt sich die folgende Arbeitsweise. Jedes für den Zugriff auf den Datenspeicher 10 relevantes Adresswort auf dem Adressbus 62 wird gemäß seinem Kennzeichen K0 bis K7 in dem zugehörigen Adresspuffer 108, 110 gespeichert und gleichzeitig mit den Adressworten in der Vergleichseinheit 102 verglichen, die bereits in der Adresspuffereinheit 100 gespeichert sind und die Schreib-Adressen enthalten.

Als Vergleichsergebnis für das jeweils zuletzt auf dem Adressbus 62 übermittelte Adresswort ergibt sich am Ausgang der Vergleichseinheit 102 ein Abhängigkeitsvektor, der in derjenigen Zustandsspeicherzelle 134, 136 gespeichert wird, die dem Kennzeichen K0 bis K7 zugeordnet ist, welches auch dem aktuell auf dem Adressbus 62 übertragenem Adresswort zugeordnet ist. Im Abhängigkeitsvektor ist jede Bitstelle dem Kennzeichen des beim jeweiligen Einzelvergleich verwendeten Adresswortes der Adresspuffereinheit 100 zugeordnet. Auf der Ausgangsleitung 128 wird der Wert der ersten Bitstelle des entstehenden Abhängigkeitsvektors übertragen, wobei der ersten Bitstelle das Kennzeichen K0 zugeordnet ist. Auf der Ausgangsleitung 130 wird dagegen der Wert der letzten Bitstelle des entstehenden Abhängigkeitsvektors übertragen, wobei dieser Bitstelle das Kennzeichen K7 zugeordnet ist.

Die Abhängigkeitsvektoren in den Zustandsspeicherzellen 134, 136 werden verändert, wenn anhand der Signale auf dem Steuerbus 64 festgestellt wird, daß ein Zugriff auf den Datenspeicher 10 (vgl. Fig. 1) zu einem der Kennzeichen K0 bis K7 abgeschlossen ist. Wie auch weiter unten anhand der Figur 3 näher erläutert, werden sämtliche Bitstellen in den Zustandsspeicherzellen 134, 136 gelöscht, die dem Kennzeichen des Adresswortes zugeordnet sind, dessen Bearbeitung abgeschlossen ist.

Erst wenn sämtliche Bitstellen eines der Abhängigkeitsvektoren gelöscht sind, wird aufgrund der ODER-Verknüpfung in der Auswerteeinheit 106 für das Kennzeichen K0 bis K7 des jeweiligen Abhängigkeitsvektors ein Signal erzeugt, welches der Entscheidungseinheit 52 signalisiert, daß der Zugriff auf dem Datenspeicher 10, der das entsprechende Kennzeichen hat, durchgeführt werden kann. Auf der anderen Seite verzögert die Entscheidungseinheit 52 (vgl. Fig. 1) das Auslesen von Adresswörtern aus dem Lese-Speicher 24 solange, bis anhand des zu diesem Adresswort gehörenden Kennzeichens von der Freigabeeinheit 60 die Zulässigkeit des Zugriffs auf den Datenspeicher 10 signalisiert wird.

Figur 3 zeigt den Aufbau der Zustandsspeicherzelle 134, welche bei acht möglichen Kennzeichen auch acht D-Flipflops enthält, von denen in der Figur 3 das Flipflop 200 und das Flipflop 202 dargestellt sind. In jedem der Flipflops 200, 202 der Zustandsspeicherzelle 134 ist genau eine der Bitstellen des Abhängigkeitsvektors zu dem Kennzeichen K0 gespeichert. So werden im Flipflop 200 die erste Bitstelle 2⁰ und im Flipflop 202 die letzte Bitstelle 2⁷ gespeichert.

Die Signalleitung 138 wird an einen Eingang jedes Flipflops 200, 202 geführt, der bei Anliegen eines gültigen Adresswortes mit dem Kennzeichen K0 als Vergleichsbasis auf dem Adressbus 62 (vgl. Figur 2) den Signalwert "H" erhält und damit die Übernahme, gegebenenfalls durch ein nicht dargestelltes Taktsignal, bewirkt. Sind die Flipflops 200, 202 über die Signalleitung 138 aktiviert, so wird das im Abhängigkeitsvektor auf dem Bus 132 enthaltene Vergleichsergebnis bitweise in die Flipflops 200, 202 der Zustandsspeicherzelle 134 übernommen.

An den Ausgängen Q der Flipflops 200, 202 werden auf Ausgangsleitungen 204, 206 des Busses 142 die aktuellen Werte der Bitstellen des Abhängigkeitsvektors mit dem Kennzeichen K0 ausgegeben. Wird über den Steuerbus 64 signalisiert, daß ein Zugriff zu einem der Kennzeichen K0 bis K7 abgeschlossen ist, so wird eine Korrektur im Abhängigkeitsvektor mit dem Kennzeichen K0 vorgenommen. Dabei wird das Flipflop 200, 202 über seinen Rücksetzeingang R auf den numerischen Wert "0" zurückgesetzt, welches dem Kennzeichen K0 bis K7 zugeordnet ist, für das der Abschluß des Zugriffs signalisiert wird. So wird das Flipflop 200 über eine Leitung 208 des Steuerbusses 64 zurückgesetzt, falls ein Zugriff mit dem Kennzeichen K0 abgeschlossen wurde. Das Flipflop 202 wird über eine Leitung 210 des Steuerbusses 64 in dem Fall zurückgesetzt, in dem ein Zugriff mit dem Kennzeichen K7 abgeschlossen wurde.

Die Adresspuffer 108, 110 können, wie oben erwähnt, einen Indikator 116, 118 für die Art des Zugriffs, inbesondere zur Unterscheidung eines Lese- von einem Schreibzugriff, mit abspeichern. Dieser kann entweder an dem Vergleicher vorbeigeführt werden und in den Abhängigkeitvektor eingehen, der dann pro Kennzeichen drei Werte, durch zwei Bits codiert, enthält. Diese Werte zeigen dann an, ob der Konflikt sich auf einen früheren Lese- oder Schreibzugriff bezieht. Da die Entscheidungseinheit ohnehin zu jeder noch offenen Transaktion die Art des Zugriffs zur Verfügung hat, ist eine Speicherung in dem Abhängigkeitsvektor nicht notwendig. Damit ist dann auch eine komplexere Funktion als eine einfache Oder-Funktion 146, 150 für die Auswertung vorzusehen. Zusätzlich zu den im folgenden dargestellten Zugriffskonflikten können dann auch auf Schreiboperationen folgende Schreiboperationen erkannt und beispielsweise die älteren Schreiboperationen unterdrückt werden, wenn keine Leseoperationen vorliegen.

Alternativ werden die Vergleicher 124, 126 dergestalt ausgeführt, daß sie nicht nur die Adresse, sondern auch den Indikator berücksichtigen. Hierbei ist dann der Vergleicher so zu gestalten, daß die Koinzidenz einer Lesemit einer weiteren Leseoperation nicht wirksam wird, d.h. wie eine unterschiedliche Adresse behandelt wird. Trifft eine Lese- auf eine frühere Schreiboperation, so ist ein Konflikt vorhanden, und der Ausgang wird gesetzt. Trifft eine Schreib- auf eine frühere Leseoperation, so ist gleichfalls ein Konflikt vorhanden; es muß zunächst die Leseoperation die früheren Daten liefern. Gleiches gilt für zwei aufeinanderfolgende Schreiboperationen, die in der Reihenfolge abgearbeitet werden müssen, damit die letzten Daten gespeichert werden.

Selbstverständlich sind außer Lese- und Schreiboperationen noch andere Operationen möglich, wenn diese im System definiert sind. Hierzu gehören z.B. Synchronisationsoperationen, die als Speicher-Semaphore realisiert sind. Auch ist es denkbar, daß der SP-Bus 12 Test-Operationen unterstützt, die die Anwesenheit oder andere Eigenschaften einer Speicherzelle signalisieren. Ferner möglich sind Lese-Operationen, die asynchron ablaufen können, d.h. auch nach späteren Schreiboperationen ausgeführt werden können. Weiterhin möglich sind Lese-Operationen, die bei Kollision mit einer späteren Schreib-Operation abgebrochen werden sollen, anstatt daß gegebenenfalls die spätere Schreiboperation abgebrochen werden soll, wenn sie nicht aufschiebbar ist.

Die Speicher 108, 110 für die Adressen können zwecks Ersparnis von Speicherplatz auch schmaler sein als der Adressbus, wenn in Bezug auf die Abhängigkeit größere Blöcke als die jeweils bei einem Speicherzugriff verwendete Datenmenge verwendet werden. Dies führt dann jedoch dazu, daß ein Lesezugriff zu einem derart bestimmten Block möglicherweise verzögert wird, obwohl der noch nicht abgeschlossene Speicherzugriff lediglich eine benachbarte, im gleichen Block befindliche, aber nicht exakt dieselbe Speicherstelle betrifft. Da die Ersparnis gering ist, wird diese Variante vorzugsweise dann eingesetzt, wenn die Speicherelemente geringer Bitzahl günstig vorhanden sind oder die Indikatoren 116, 118 für die Art des Zugriffs durch Speicherung in der niedrigstwertigsten Stelle des Adresspuffers realisiert werden.

Sofern, wie oben erwähnt, die Adressspeicher 24, 26 als Direktzugriffsspeicher ausgeführt sind, die dann zweckmäßig mit dem Kennzeichen adressiert werden, kann die Freigabeeinheit anstelle eigener Adresspuffer 108, 110 die genannten Adressspeicher 24, 26 mit verwenden. Dabei wird die Ersparnis eines Adresspuffers durch eine entsprechende Anzahl von zusätzlichen Verbindungen erkauft.

## Patentansprüche

1. Verfahren zum Steuern des Zugriffs auf Speicherzellen eines Datenspeichers (10) über ein Bussystem (12), bei dem getrennte Adress- und Datenphasen verwendet werden, die durch ein gemeinsames Kennzeichen einander zugeordnet werden, mit den Merkmalen:
- in einem mit dem Kennzeichen adressierten Adresspuffer (100, 108, 110) sind die für das jeweilige Kennzeichen zuletzt verwendeten Adressen gespeichert,
- während einer Adressphase wird die betroffene Adresse mit in dem Puffer (100, 108, 110) gespeicherten Adressen verglichen (102), wodurch ein Abhängigkeitsvektor (132) gebildet wird, dessen den Kennzeichen entsprechende Stellen das Vergleichsergebnis enthalten und der in dem durch das Kennzeichen adressierten Zustandsspeicher (134, 144) einer Zustandsmatrix (104) abgelegt wird,
- eine Entscheidungseinheit (52, 106, 146, 150) wertet die gespeicherten, den Kennzeichen zugeordneten Abhängigkeitsvektoren dahingehend aus, ob noch eine Abhängigkeit zu früheren Speicherzugriffen besteht,
- im Verlauf der Adressphase wird die jeweilige Adresse in dem dem jeweiligen Kennzeichen zugeordneten Puffer (100, 108, 110) abgespeichert,
- der Abschluß einer Datenphase löscht die dem Kennzeichen dieser Datenphase entsprechenden Elemente in den gespeicherten Abhängigkeitsvektoren.

2. Verfahren nach Anspruch 1, wobei in dem Puffer zugleich mit der Adresse auch ein Indikator gespeichert wird, der die Art des Zugriffs angibt.

3. Verfahren nach Anspruch 1 oder 2, wobei die Abhändigkeitsvektoren durch Veroderung (106, 146, 150) ausgewertet werden.

4. Schaltungsanordnung zum Steuern des Zugriffs auf Speicherzellen eines Datenspeichers (10) über ein Bussystem (12), bei dem getrennte Adress- und Datenphasen verwendet werden, die durch ein gemeinsames Kennzeichen einander zugeordnet werden, mit den Merkmalen:
- ein Adresspuffer (100, 108, 110) ist mit seinen Dateneingängen mit dem Adressbus und mit seiner Adresse mit dem Kennzeichen verbunden,
- ein Vergleicher (102, 124, 126) ist mit den Ausgängen des Adresspuffers und mit dem Adressbus verbunden,
- die Ausgänge der Vergleicher werden zu einem Abhängigkeitsvektor zusammengefaßt und jeweils an die Eingänge von Zustandsspeichern (104, 134, 136) gelegt, die gleichfalls mit dem Kennzeichen adressiert werden,
- die Ausgänge der Zustandsspeicher werden über eine Auswertefunktion (150, 146) mit einer Entscheidungseinheit (52) verbunden,
- Löscheingänge der Speicherzellen der Zustandsspeichermatrix (104) sind über eine Verarbeitungslogik derart mit dem Steuerbus verbunden, daß das Ende einer Datenphase die dem Kennzeichen zugeordneten Stellen in jedem der Zustandsspeicher (134, 136) löscht.

5. Schaltungsanordnung nach Anspruch 4, wobei zusammen mit den Adressen im Adresspuffer (100) auch ein Indikator gespeichert wird, der die Art des Zugriffs angibt.

6. Schaltungsanordnung nach Anspruch 4 oder 5, wobei die Auswertefunktion (150, 146) eine Veroderung ist.

7. Schaltungsanordnung nach Anspruch 4, 5 oder 6, bei der ein für den Datenzugriff benötigter Adressspeicher (24, 26) als Adresspuffer (108, 110) mitverwendet wird.

## Claims

1. Method of controlling access to memory cells of a data store (10) via a bus system (12), which uses separate address and data phases allocated to one another by a common identifier, having the following features:
- an address buffer (100, 108, 110) addressed using the identifier stores the addresses last used for the respective identifier,
- during an address phase, the relevant address is compared (102) with addresses stored in the buffer (100, 108, 110), and this forms a dependency vector (132) whose positions corresponding to the identifiers contain the comparison result and which is stored in the status memory (134, 144) of a status matrix (104), said status memory being addressed by the identifier,
- a decision unit (52, 106, 146, 150) evaluates the stored dependency vectors allocated to the identifiers to determine whether there is still any dependency in relation to earlier memory access operations,
- in the course of the address phase, the respective address is stored in the buffer (100, 108, 110) allocated to the respective identifier,
- completion of a data phase deletes those elements in the stored dependency vectors that correspond to the identifier for this data phase.

2. Method according to Claim 1, in which the buffer also stores an indicator at the same time as the address, this indicator specifying the type of access.

3. Method according to Claim 1 or 2, in which the dependency vectors are evaluated by ORing (106, 146, 150).

4. Circuit arrangement for controlling access to memory cells of a data store (10) via a bus system (12), which uses separate address and data phases allocated to one another by a common identifier, having the following features:
- an address buffer (100, 108, 110) is connected to the address bus by its data inputs and to the identifier by its address,
- a comparator (102, 124, 126) is connected to the outputs of the address buffer and to the address bus,
- the outputs of the comparators are combined to form a dependency vector and are each connected to the inputs of status memories (104, 134, 136), which are likewise addressed by the identifier,
- the outputs of the status memories are connected to a decision unit (52) via an evaluation function (150, 146),
- delete inputs of the memory cells in the status memory matrix (104) are connected to the control bus via a processing logic unit such that the end of a data phase deletes those positions in each of the status-memories (134, 136) that are allocated to the identifier.

5. Circuit arrangement according to Claim 4, in which an indicator which specifies the type of access is also stored along with the addresses in the address buffer (100).

6. Circuit arrangement according to Claim 4 or 5, in which the evaluation function (150, 146) is an OR function.

7. Circuit arrangement according to Claim 4, 5 or 6, in which an address store (24, 26) required for data access is simultaneously used as an address buffer (108, 110).

## Revendications

1. Procédé de commande de l'accès à des cellules de mémoire d'une mémoire (10) de données par un système (12) de bus, dans lequel on utilise des phases distinctes d'adresse et de données, qui sont associées l'une à l'autre par un signe caractéristique commun comprenant les caractéristiques:
- dans un tampon (100, 108, 110) d'adresse qui est adressé par le signe caractéristique, sont mémorisées les adresses utilisées en demier pour chaque signe caractéristique,
- pendant une phase d'adresse, l'adresse concernée est comparée aux adresses mémorisées dans le tampon (100, 108, 110) de manière à former un vecteur (132) de dépendance, dont les positions correspondantes aux signes caractéristiques contiennent le résultat de la préparation et qui est mémorisée dans la mémoire (134, 144) d'état d'une matrice (104) d'état, mémoire qui est adressée par le signe caractéristique,
- une unité (52, 106, 146, 150) de décision évalue les vecteurs de dépendance mémorisés et associés aux caractéristiques afin de savoir s'il y a encore une dépendance à des accès antérieurs à la mémoire,
- au cours de la phase d'adresse, l'adresse respective est mémorisée dans le tampon (100, 108, 110) associé au signe caractéristique respectif,
- la fin d'une phase de données efface les éléments dans les vecteurs de dépendance mémorisés qui correspondent aux signes caractéristiques de cette phase de données.

2. Procédé suivant la revendication 1, dans lequel il est mémorisé dans le tampon en même temps que l'adresse également un indicateur qui indique le type d'accès.

3. Procédé suivant la revendication 1 ou 2, dans lequel on exploite les vecteurs de dépendance par logique OU (106, 146, 150).

4. Circuit de commande de l'accès à des cellules de mémoire d'une mémoire (10) de données par un système (12) de bus, dans lequel on utilise des phases distinctes d'adresse et de données qui sont associées l'une à l'autre par un signe caractéristique commun, comprenant les caractéristiques :
- un tampon (100, 108, 110) d'adresse est relié par ses entrées de données au bus d'adresse et par son adresse au signe caractéristique,
- un comparateur (102, 124, 126) est relié aux sorties du tampon d'adresse et au bus d'adresse,
- les sorties du comparateur sont rassemblées en un vecteur de dépendance et sont envoyées respectivement aux entrées de mémoires (104, 134, 136) d'état qui sont adressées en même temps par le signe caractéristique,
- les sorties des mémoires d'état sont reliées par une fonction (150, 146) d'exploitation à une unité (52) de décision,
- des entrées d'effacement des cellules de mémoire de la matrice (104) de mémoire d'état sont reliées par une logique de traitement au bus de commande de façon que la fin d'une phase de données efface les positions associées aux signes caractéristiques dans chacune des mémoires (134, 136) d'état.

5. Procédé suivant la revendication 4, dans lequel ensemble avec les adresses on mémorise dans le tampon (100) d'adresse également un indicateur qui indique le type d'action.

6. Procédé suivant la revendication 4 ou 5, dans lequel la fonction (150, 146) d'exploitation est une fonction logique OU.

7. Procédé suivant la revendication 4, 5 ou 6, dans lequel une mémoire (24, 26) d'adresse nécessaire pour l'accès aux données est utilisée en même temps comme tampon (108, 110) d'adresse.
